Europäisches Patentamt

European Patent Office

Office européen des brevets

(11) Publication number: **0 300 777**
A2

(12) **EUROPEAN PATENT APPLICATION**

(21) Application number: **88306681.3**

(22) Date of filing: **28.06.88**

(51) Int. Cl.⁴: **A 01 N 25/00**
**A 01 N 47/38**

(30) Priority: **01.07.87 GB 8715500**

(43) Date of publication of application:
**25.01.89 Bulletin 89/04**

(84) Designated Contracting States:
**AT BE CH DE ES FR GB GR IT LI LU NL SE**

(71) Applicant: **SCHERING AGROCHEMICALS LIMITED**
**Hauxton Cambridge CB2 5HU (GB)**

(72) Inventor: **Buschhaus, Herbert**
**Am Eichenhain 82**
**Berlin 28 (DE)**

(74) Representative: **Waldman, Ralph David et al**
**Schering Agrochemicals Limited Industrial Property**
**Department Chesterford Park Research Station**
**Saffron Walden Essex CB10 1XL (GB)**

(54) **Method of applying fungicides.**

(57) Eyespot in cereals is controlled by applying the fungicide
before emergence of the cereal plant.

EP 0 300 777 A2

**Description**

## Method of applying Fungicides

This invention relates to the use of fungicides.

One the most important diseases in cereals is fungus eyespot, caused by the fungus Pseudocercosporella herpotrichoides. When using all cereal fungicides for treatment of foliar or stem-based diseases, it is usual to apply the fungicide to the plant. Thus when combating eyespot, the fungicide is usually applied at the time when stem elongation or noding starts. Surprisingly, we have now found that good control of eyespot can be achieved by applying an eyespot fungicide to the locus of the plant before the plant has emerged. We have found that such pre-emergent application gives at least as good, if not better, control of eyespot than when applying the fungicide in the conventional manner.

Accordingly the invention provides a method of controlling eyespot in cereals by applying an eyespot fungicide at a rate of 100 - 2000, preferably 200 - 1000, grams of active ingredient per hectare of the ground where the cereal is planted, before emergence of the cereal plant.

The eyespot fungicide is preferably from the group known as ergosterol biosynthesis inhibitors (EBI) and the invention is particularly valuable when using prochloraz (N-propyl-N-[2-(2,4,6-trichlorophenoxy)ethyl]imidazole-1-carboxamide. The prochloraz can be applied as the free base or in the form of one of its metal complexes, e.g. the manganese or copper chloride complex. Other EBIs which can be used in accordance with the invention include triazole fungides, such as cyproconazole, (2-(4-chlorophenyl)-3-cyclopropyl-1-(1H-1,2,4-triazol-1-yl)butan-2-ol): flusilazole, (bis(4-fluorophenyl)methyl(1H-1,2,4-triazol-1-ylmethyl)silane) and that known by the code number BAY HWG 1608. (1-(4-chlorophenyl)-4,4,-dimethyl-3-(1H-1,2,4-triazol-1-ylmethyl)pentan-3-ol).

Examples of non-EBI fungicides which can be used in accordance with the invention include carbendazim and mancozeb.

The fungicide is generally applied in conventional manner for example by spraying directly to the soil or by applying as granules which themselves may be incorporated into furrows at the same time as planting the seeds of the crop. Other suitable additives may be applied at the same time such as fertilisers, herbicides, insecticides and other fungicides, e.g. tolclofos-methyl.

The method of the present invention has the advantage that it is easier to apply the fungicide before any crop has emerged. Generally, farmers apply a pre-emergent herbicide and thus by applying the eye-spot fungicide at the same time, an extra spraying operation can be avoided. Further, when the fungicide is applied when the crop is growing, the fungal disease might be too well established to obtain optimum control. Pre-emergent application avoids this problem.

The invention is illustrated in the following examples.

Example 1

Wheat was sown in 8.5 cm square pots at a rate of 7 seeds per pot. The pots were inoculated with a spore suspension of eyespot, Pseudocercosporella herpotrichoides by spraying onto the soil surface 3 days after sowing. One day later, the pots were sprayed with aqueous dispersions of the test fungicides at various concentrations, at a rate of 200 litres/ha .

Each treatment was replicated 5 times. The pots were then incubated in a constant environment room for 4 weeks followed by 4 weeks out of doors, when disease levels were assessed by removing 7 stems from each pot and recording the number of infected stems, whereby the degree of control could be calculated.

For the purposes of comparison, tests were simultaneously carried out in which the treatment with fungicide was made when the first leaf of the wheat had fully expanded, (post-emergent treatment). The results are shown below.

| Fungicide | Rate (g/ha) | Disease control(%) | |
| --- | --- | --- | --- |
| | | Pre-emergent application | Post-emergent application |
| prochloraz | 800 | 90 | 74 |
| | 400 | 100 | 97 |
| | 200 | 100 | 97 |
| cyproconazole | 800 | 100 | 97 |
| | 400 | 90 | 65 |
| | 200 | 90 | 44 |
| flusilazole | 800 | 90 | 94 |
| | 400 | 100 | 94 |
| | 200 | 90 | 79 |
| BAY HWG 1608 | 800 | 90 | 65 |
| | 400 | 90 | 29 |
| | 200 | 70 | 12 |

Example 2

Fields of wheat were sown and eight days later, an aqueous dispersion of prochloraz was applied at a rate of 750 grams per hectare to the soil. In a comparison field, prochloraz was applied at the same rate but when the plants had reached growth stage 32 on the Zadoks scale. At harvest of the crop it was found that the level of control of eyespot on the plants which had been treated with prochloraz pre-emergently was 81% whereas the level of control of eyespot on the conventionally treated plants was only 74%.

Claims

1. A method of controlling eyespot in cereals by applying an eyespot fungicide at a rate of 100 - 2000, preferably 200 - 1000, grams of active ingredient per hectare of the ground where the cereal is planted, before emergence of the cereal plant.
2. A method according to claim 1 in which the fungicide is an ergosterol biosynthesis inhibitor (EBI).
3. A method according to claim 2 in which the fungicide is prochloraz.